# EUROPÄISCHE PATENTSCHRIFT

(11) **EP 2 178 427 B1**
(45) Veröffentlichungstag und Bekanntmachung des Hinweises auf die Patenterteilung: **11.09.2019**
(21) Anmeldenummer: 08786614.1
(22) Anmeldetag: 30.07.2008
(51) Int. Cl.: A47J 43/07

(54) **KÜCHENMASCHINE MIT MITTELN ZUM ABFÜHREN VON VERUNREINIGUNGEN**
KITCHEN MACHINE COMPRISING MEANS FOR DISCHARGING IMPURITIES
MACHINE DE CUISINE DOTÉE DE MOYENS D'ÉVACUATION DES ENCRASSEMENTS

(30) Priorität: 14.08.2007 DE 102007038350
(43) Veröffentlichungstag der Anmeldung: 28.04.2010
(73) Patentinhaber: BSH Hausgeräte GmbH, 81739 München (DE)
(72) Erfinder: RUDEZ, Darko, 3230 Sentjur (SI); PESEC, Jurij, 3301 Petrovce (SI); OBLAK, Aleksander, 3332 Recica Ob Savinji (SI)
(86) Internationale Anmeldenummer: PCT/EP2008/059980
(87) Internationale Veröffentlichungsnummer: WO 2009/021844

(56) Entgegenhaltungen:
- DE-U1- 20 206 403
- US-A- 3 175 594
- US-A- 3 220 450
- US-A- 5 855 431
- US-A1- 2007 140 048
- US-A1- 2008 219 089

## Beschreibung

### Hintergrund der Erfindung

Die Erfindung betrifft eine Küchenmaschine mit einem Gehäuse, das mindestens eine in einer Gehäusemulde angeordnete Kupplung zum Ankuppeln von Arbeitsvorrichtungen aufweist, wobei die Gehäusemulde mit Mitteln zum Abführen von Verunreinigungen versehen ist, und die Gehäusemulde (4) mit einem in dem Umfang des Gehäuses (2) eingeformten, in Richtung des Gehäusebodens (13) verlaufenden Kanal (10) verbunden ist gemäß Oberbegriff des Anspruchs 1.

### Stand der Technik

Aus der Druckschrift DE 100 16 302 A1 ist eine Küchenmaschine mit einem Gehäuse bekannt, die eine erste Kupplung zum Aufsetzen eines Rührbehälters und eine zweite Kupplung zum Anbringen von Werkzeugen aufweist. Die erste Kupplung besteht aus dem oberen Ende einer vertikal angeordneten Antriebswelle, welche durch den Rührbehälter hindurch innerhalb einer schlanken, turmartig vom Gehäuseboden aufragenden Ausformung des Gehäuses verläuft und in dem Deckel des Rührbehälters gelagert ist. In seitlichem Abstand dazu ist das Gehäuse insgesamt erhöht ausgebildet und in seinem oberen Bereich mit einer zylinderförmigen Gehäusemulde ausgestattet, aus der an einer zweiten Kupplung mit eine weitere Antriebswelle auskragt. Die Antriebswellen verlaufen zueinander parallel und werden gemeinsam von einem im erhöhten Teil des Gehäuses befindlichen Elektromotor angetrieben, wobei die Drehzahl der Antriebswelle für den Rührbehälter durch ein Getriebe gegenüber der Drehzahl der werkzeugseitigen Antriebswelle herabgesetzt ist. Bei derartigen vorbekannten Küchenmaschinen können sich Verunreinigungen, die insbesondere flüssig sind und entlang der Werkzeuge nach unten fließen, in der Gehäusemulde sammeln und dort Funktionsstörungen hervorrufen.

Aus der Praxis sind verschiedene Anregungen bekannt, diese Verunreinigungen unter Schwerkraftwirkung aus der Gehäusemulde abzuführen. Bei der Küchenmaschine, welche in der Druckschrift US 3 175 594 offenbart ist, ist die Gehäusemulde mit einem Durchbruch zum Gehäuseumfang hin versehen, durch welchen die Verunreinigungen nach außen geleitet werden und dann entlang des Gehäuseumfangs nach unten laufen. Diese Ausbildung ist ästhetisch unbefriedigend und erschwert wegen der auftretenden Schmierwirkung die Handhabung der Küchenmaschine.

Eine andere Anregung sieht vor, von der Gehäusemulde aus eine Schlauchleitung durch das Gehäuseinnere bis zum Gehäuseboden zu führen, durch den die Verunreinigungen aus der Küchenmaschine heraus geleitet werden. Diese Lösung erhöht den Montageaufwand und damit die Herstellkosten der Küchenmaschine. Ferner ist die Reinigung der-Schlauchleitung beim späteren Betreiben der Küchenmaschine aufwändig.

Ferner ist noch bekannt, die Verunreinigungen aus der Gehäusemulde einfach in das Gehäuseinnere eintreten zu lassen und den elektrischen Antrieb durch eine Kunststoffhaube zu schützen. Die Verunreinigungen sammeln sich dann in unhygienischer Weise oberhalb des Gehäusebodens im Gehäuseinneren.

### Der Erfindung zugrundeliegende Aufgabe

Der Erfindung liegt die Aufgabe zugrunde, eine vorbekannte Küchenmaschine mit Mitteln zum Abführen von Verunreinigungen aus der Gehäusemulde auszustatten, welche konstruktiv einfach ausgebildet, optisch ansprechend und einfach zu reinigen sind.

### Erfindungsgemäße Lösung

Die Aufgabe wird durch eine gattungsgemäße Küchenmaschine mit den Merkmalen des Anspruchs 1 gelöst.

Derartige Gehäuse sind üblicherweise als komplexe Spritzgiessteile aus Kunststoff gefertigt. Die Kanalkontur kann daher in das betreffende Spritzgiesswerkzeug eingearbeitet werden und ist nachfolgend einstückig mit dem Gehäuse ausgebildet. Da der Kanal von außen zugänglich ist, kann er mit geringem Aufwand, gegebenenfalls sogar bei aufgesetzter Arbeitsvorrichtung, durch einfaches Auswischen gereinigt werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Der Kanal ist mit einer Blende abdeckbar, die flächenbündig mit dem angrenzenden Umfangsbereichs des Gehäuses ausgebildet ist. Falls der betreffende Umfang des Gehäuses gewölbt ausgebildet ist, wird die Blende vorzugsweise derart schalenartig ausgebildet, dass sie den Gehäuseumfang ergänzt.

Nach einer besonderen Ausbildung der Erfindung ist die Blende lösbar mit dem Gehäuse verrastbar, so dass sie zwar beim Betreiben der Küchenmaschine ausreichend gesichert ist, zur Reinigung des Kanals jedoch werkzeuglos entfernt werden kann. Es versteht sich, dass auch die Blende vorzugsweise so ausgebildet ist, dass sie leicht einer entsprechenden Reinigung unterzogen werden kann. Zur leichten Reinigung und/oder um den Abfluss der Verunreinigungen während des Betriebs zu erleichtern, sind die Oberflächen des Kanals und/oder der Blende in dem Bereich, in dem Sie mit der Verunreinigung in Kontakt kommen können, vorzugsweise im Wesentlichen glatt ausgeführt.

Die Gehäusemulde weist Zonen unterschiedlicher Tiefe auf, wobei der Kanal aus der tiefsten Stelle der Gehäusemulde ausmündet. Vorteilhafterweise ist die Gehäusemulde dabei so gestaltet, dass stets ein Gefälle in Richtung dieser Ausmündung vorhanden ist. Die tiefste Stelle der Gehäusemulde ist dabei vorzugsweise im Bereich ihres Außenumfangs angeordnet, wodurch der Weg zum Gehäuseäußeren verkürzt wird.

Der Kanal weist einen ersten, von der Gehäusemulde aus nach unten geneigten und radial nach außen gerichteten Kanalabschnitt sowie einen sich daran anschließenden zweiten, senkrecht nach unten gerichteten Kanalabschnitt auf. Der zweite Kanalabschnitt ist dabei vorzugsweise über seine gesamte Länge mit einem gleichbleibenden Querschnitt versehen und weist insbesondere keine Engstellen auf. Die Ausmündung des zweiten Kanalabschnitts ist bevorzugt seitlich eines Rücksprungs des Gehäusebodens angeordnet. Mit dieser Ausführung der Erfindung ist erreichbar, dass von dort aus die Verunreinigungen auf die Stellfläche der Küchenmaschine fließen können.

Die Kupplung kragt vorzugsweise senkrecht nach oben aus der Gehäusemulde aus und ist von einer nach oben kragenartig vorstehenden Ausformung der Gehäusemulde umgeben. Diese Ausformung kann einerseits den Durchtritt der betreffenden Antriebswelle vor Verunreinigungen schützen. Sie kann durch angeformte Haltemittel ferner zur lösbaren Befestigung unterschiedlicher Arbeitsvorrichtungen dienen.

Die Erfindung ist mit besonderem Vorteil bei einer Küchenmaschine anwendbar, welche eine erste, insbesondere zum Aufsetzen eines Rührbehälters geeignete Kupplung sowie eine dazu beabstandete zweite, zum Aufsetzen von Werkzeugen vorgesehene Kupplung aufweist, wobei die Gehäusemulde vorzugsweise der letztgenannten Kupplung zugeordnet ist.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Einen Längsschnitt durch Gehäuse und Gehäusemulde einer erfindungsgemäß ausgebildeten Küchenmaschine entlang des aus der Gehäusemulde ausmündenden Kanals mit aufgesetzter Blende;
- Fig. 2:: Eine Aufsicht auf die Gehäusemulde mit entfernter Blende;

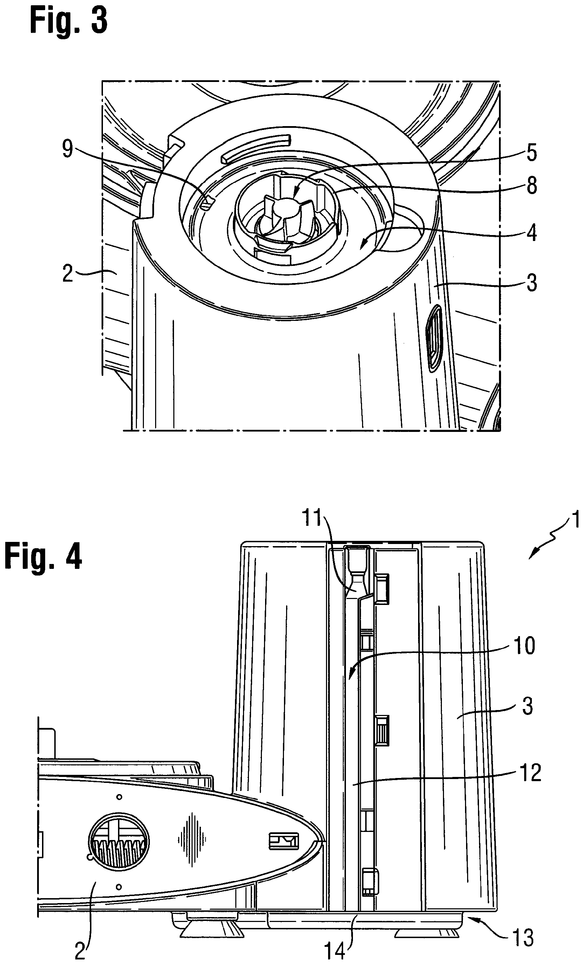

- Fig. 3:: Die Gehäusemulde in perspektivischer Ansicht mit entfernter Blende;
- Fig. 4:: Eine seitliche Ansicht des mit dem Kanal versehenen Gehäusebereichs mit entfernter Blende;

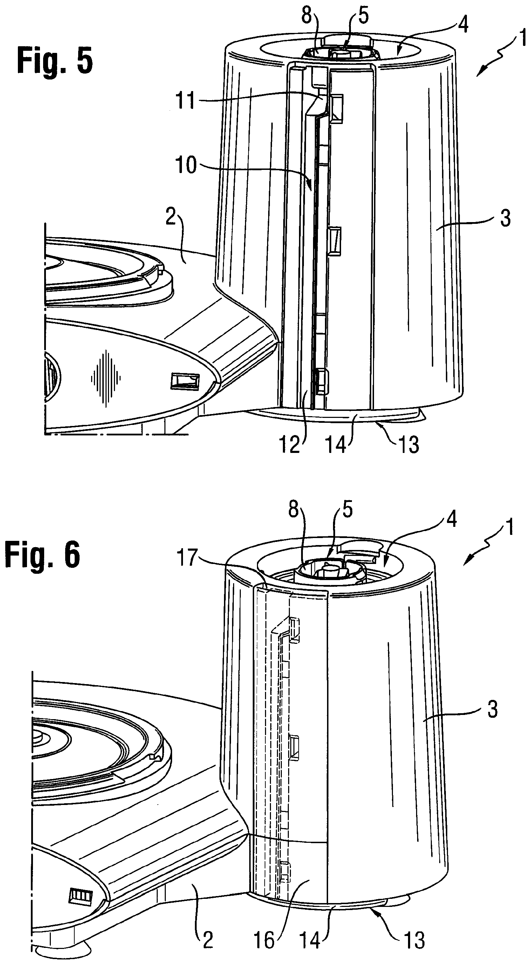

- Fig. 5:: Eine perspektivische Ansicht des Gehäusebereichs nach Fig. 4; und
- Fig. 6:: Das Gehäuse in perspektivischer Ansicht mit aufgesetzter Blende.

### Ausführliche Beschreibung anhand eines Ausführungsbeispiels

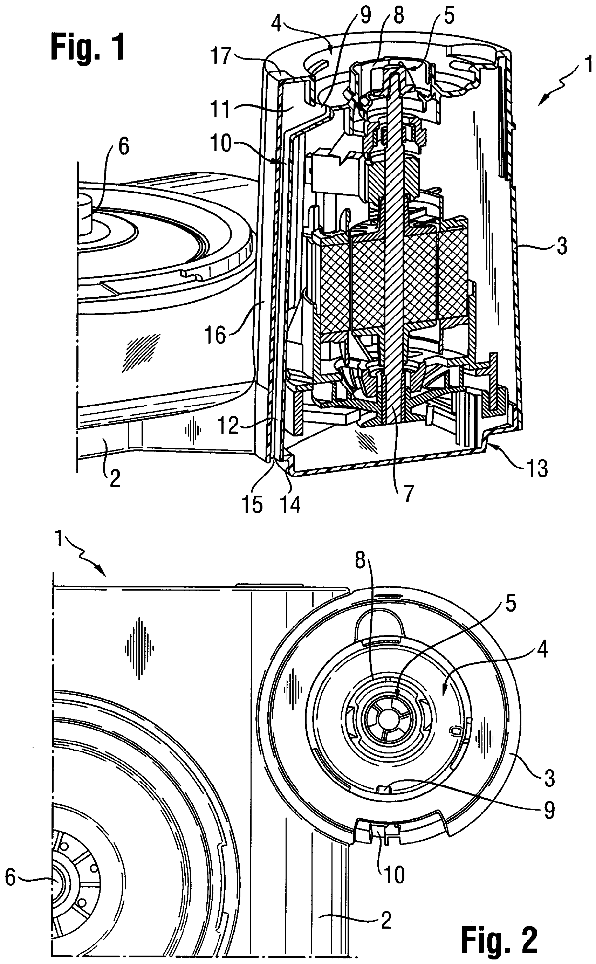

Die in den Figuren nur auszugsweise dargestellte Küchenmaschine 1 besteht aus einem Gehäuse 2 mit einer nach oben leicht konisch zulaufenden Erhöhung 3, welche an ihrer Oberseite eine Gehäusemulde 4 mit einer Kupplung 5 zur mechanischen Wirkverbindung mit auswählbaren Werkzeugen aufweist. Eine weitere, seitlich versetzt angeordnete Kupplung 6 zum Aufsetzen eines Rührbehälters ist in den Abbildungen nur teilweise sichtbar. Durch das Innere der Erhöhung 3 verläuft, wie aus dem Schnitt nach Fig. 1 ersichtlich, die der Kupplung 5 zugeordnete und im Gehäuse senkrecht drehbar gelagerte Antriebswelle 7. Koaxial zur Kupplung 5 ist in der Gehäusemulde 4 eine nach oben kragenartig vorstehende Ausformung 8 vorgesehen.

Der Boden der im Wesentlichen zylinderförmigen Gehäusemulde 4 verläuft bei der Darstellung nach Fig. 1 von der rechten zur linken Seite hin abfallend und weist an seiner tiefsten, radial außenliegenden Stelle eine Ausmündung 9 in einen Kanal 10 auf. Der Kanal 10 besteht aus einem ersten Kanalabschnitt 11, welcher die Gehäusemulde 4 mit dem Außenumfang der Erhöhung 3 verbindet, sowie einem zweiten Kanalabschnitt 12, welcher die Verunreinigungen von dort aus nach unten zur Standfläche der Küchenmaschine 1 leitet. Der erste Kanalabschnitt 11 führt von der Ausmündung 9 her nach unten geneigt in radialer Richtung. Der sich daran anschließende zweite Kanalabschnitt 12 ist senkrecht nach unten gerichtet und an seiner Unterseite offen. Der Gehäuseboden 13 weist jenseits des Kanals 10 einen Rücksprung 14 auf, so dass die Ausmündung 15 des Kanals 10 gegenüber der Standfläche der Küchenmaschine 1 erhöht angeordnet ist. Hierdurch ist ein ungehinderter Abfluss der Verunreinigungen möglich.

Der Kanal 10 ist über die gesamte Vertikalerstreckung der Erhöhung 3 hinweg mit einer schalenartigen Blende 16 abgedeckt, welche eine Abkantung 17 zum Umgreifen des oberen Rands der Erhöhung 3 aufweist und durch Rastmittel lösbar mit dem Gehäuse 2 verbunden ist. Die Blende ist dabei derart gestaltet, dass sie die Außenfläche des Gehäuses 2 flächenbündig fortsetzt. Von der unvermeidlichen Trennfuge abgesehen ist die Blende 16 damit unsichtbar in das Gehäuse 3 eingefügt, kann zum Reinigen des Kanals 16 jedoch händisch entfernt werden.

Die Erfindung ermöglicht eine konstruktiv einfache, zugleich hygienische und ästhetisch ansprechende Abführung von Verunreinigungen aus der Gehäusemulde 4.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Küchenmaschine (1) mit einem Gehäuse (2), welches mindestens eine in einer Gehäusemulde (4) angeordnete Kupplung (5, 6) zum Ankuppeln von Arbeitsvorrichtungen aufweist, wobei die Gehäusemulde mit Mitteln zum Abführen von Verunreinigungen versehen ist, und die Gehäusemulde (4) mit einem in den Umfang des Gehäuses (2) eingeformten, in Richtung des Gehäusebodens (13) verlaufenden Kanal (10) verbunden ist, **wobei** der Kanal (10) mit einer Blende (16) abdeckbar ist, **dadurch gekennzeichnet, dass** die Blende (16) flächenbündig mit dem angrenzenden Umfangsbereichs des Gehäuses (2) ausgebildet ist.

2. Küchenmaschine nach Anspruch 1, **dadurch gekennzeichnet, dass** die Blende (16) lösbar mit dem Gehäuse (2) verrastbar ist.

3. Küchenmaschine nach Anspruch 1 oder 2, **dadurch gekennzeichnet, dass** die Gehäusemulde (4) Zonen unterschiedlicher Tiefe aufweist und der Kanal (10) aus der tiefsten Stelle der Gehäusemulde ausmündet.

4. Küchenmaschine nach Anspruch 3, **dadurch gekennzeichnet, dass** die tiefste Stelle im Bereich des Außenumfangs der Gehäusemulde (4) angeordnet ist.

5. Küchenmaschine nach Anspruch 3 oder 4, **dadurch gekennzeichnet, dass** der Kanal (10) einen ersten, von der Gehäusemulde (4) her nach unten geneigt und radial nach außen gerichteten Kanalabschnitt (11) und einen sich daran anschließenden zweiten, senkrecht nach unten gerichteten Kanalabschnitt (12) aufweist.

6. Küchenmaschine nach Anspruch 5, **dadurch gekennzeichnet, dass** der zweite Kanalabschnitt (12) über seine gesamte Länge einen gleichbleibenden Querschnitt aufweist.

7. Küchenmaschine nach Anspruch 5 oder 6, **dadurch gekennzeichnet, dass** die Ausmündung (15) des zweiten Kanalabschnitts (12) seitlich eines Rücksprungs (14) des Gehäusebodens (13) angeordnet ist.

8. Küchenmaschine nach einem der vorhergehenden Ansprüche, **dadurch gekennzeichnet, dass** die Kupplung (5, 6) senkrecht nach oben aus der Gehäusemulde (4) auskragt und von einer nach oben kragenartig vorstehenden Ausformung (8) der Gehäusemulde umgeben ist.

9. Küchenmaschine nach einem der vorhergehenden Ansprüche, **dadurch gekennzeichnet, dass** die Küchenmaschine (1) eine erste, insbesondere zum Aufsetzen eines Rührbehälters geeignete Kupplung (6) und eine dazu beabstandete zweite, zum Aufsetzen von Werkzeugen vorgesehene Kupplung (5) aufweist.

10. Küchenmaschine nach Anspruch 9, **dadurch gekennzeichnet, dass** die Gehäusemulde (4) der oberen Kupplung (5) zugeordnet ist.

## Claims

1. Kitchen machine (1) having a housing (2), which comprises at least one coupling (5, 6) arranged in a housing recess (4) for coupling working apparatuses, with the housing recess being provided with means for discharging impurities and the housing recess (4) being connected to a channel (10) moulded in the periphery of the housing (2) and running in the direction of the housing base (13), **wherein** the channel (10) can be covered with a screen (16), **characterised in that** the screen (16) is embodied flush with the bordering peripheral area of the housing (2).

2. Kitchen machine according to claim 1, **characterised in that the** screen (16) can be detachably latched to the housing (2).

3. Kitchen machine according to claim 1 or 2, **characterised in that** the housing recess (4) has zones of different depths and the channel (10) opens out of the lowest point of the housing recess.

4. Kitchen machine according to claim 3, **characterised in that** the lowest point is arranged in the region of the outer periphery of the housing recess (4).

5. Kitchen machine according to claim 3 or 4, **characterised in that** the channel (10) has a first channel section (11) inclined downwards from the housing recess (4) and directed radially outwards and a second channel section (12) connected thereto and directed vertically downwards.

6. Kitchen machine according to claim 5, **characterised in that** the second channel section (12) has a consistent cross-section across its entire length.

7. Kitchen machine according to claim 5 or 6, **characterised in that** the opening (15) of the second channel section (12) is arranged adjacent to a recess (14) of the housing base (13).

8. Kitchen machine according to one of the preceding claims, **characterised in that** the coupling (5, 6) projects vertically upwards from the housing recess (4) and is surrounded by a moulding (8) of the housing recess which protrudes upwards in the manner of a flange.

9. Kitchen machine according to one of the preceding claims, **characterised in that** the kitchen machine (1) has a first coupling (6) suited in particular to attaching a mixing container and a second coupling (5), at a distance therefrom, provided for attaching tools.

10. Kitchen machine according to claim 9, **characterised in that** the housing recess (4) is assigned to the upper coupling (5).

## Revendications

1. Appareil de cuisine (1) avec un carter (2), lequel présente au moins un accouplement (5, 6) disposé dans une auge de carter (4) pour l'accouplement de dispositifs de travail, dans lequel l'auge de carter est dotée de moyens pour l'évacuation d'impuretés, et l'auge de carter (4) est reliée à un conduit (10) moulé dans le périmètre du carter (2), s'étendant en direction du fond du carter (13), **dans lequel** le conduit (10) peut être couvert par un cache (16), **caractérisé en ce que** le cache (16) est exécuté à fleur de surface avec la zone périmétrique contiguë du carter (2).

2. Appareil de cuisine selon la revendication 1, **caractérisé en ce que** le cache (16) est encliquetable de façon amovible avec le carter (2).

3. Appareil de cuisine selon la revendication 1 ou 2, **caractérisé en ce que** l'auge de carter (4) présente des zones de profondeur différente et le conduit (10) débouche de l'endroit le plus profond de l'auge de carter.

4. Appareil de cuisine selon la revendication 3, **caractérisé en ce que** l'endroit le plus profond est disposé au niveau du périmètre extérieur de l'auge de carter (4).

5. Appareil de cuisine selon la revendication 3 ou 4, **caractérisé en ce que** le conduit (10) présente une première section de conduit (11) inclinée vers le bas au départ de l'auge de carter (4) et dirigée radialement vers l'extérieur et une deuxième section de conduit (12) y raccordée et dirigée verticalement vers le bas.

6. Appareil de cuisine selon la revendication 5, **caractérisé en ce que** la deuxième section de conduit (12) présente une section constante sur toute sa longueur.

7. Appareil de cuisine selon la revendication 5 ou 6, **caractérisé en ce que** l'embouchure (15) de la deuxième section de conduit (12) est disposée latéralement par rapport à un épaulement (14) du fond du carter (13).

8. Appareil de cuisine selon l'une des revendications précédentes, **caractérisé en ce que** l'accouplement (5, 6) fait saillie verticalement vers le haut au départ de l'auge de carter (4) et est entouré par un façonnement (8) de l'auge de carter faisant saillie vers le haut.

9. Appareil de cuisine selon l'une des revendications précédentes, **caractérisé en ce que** l'appareil de cuisine (1) présente un premier accouplement (6), en particulier pour la mise en place d'un contenant mélangeur, et un deuxième accouplement (5) distant de celui-ci, prévu pour la mise en place d'outils.

10. Appareil de cuisine selon la revendication 9, **caractérisé en ce que** l'auge de carter (4) est affectée à l'accouplement supérieur (5).
